# EUROPEAN PATENT SPECIFICATION

(11) **EP 3 266 816 B1**
(45) Date of publication and mention of the grant of the patent: **28.07.2021**
(21) Application number: 17160234.5
(22) Date of filing: 10.03.2017
(51) Int. Cl.: C08K 5/5399, C08L 69/00, C08L 55/02, C08L 63/00, C09K 21/12

(54) **FLAME-RETARDANT ENGINEERING PLASTIC AND PREPARATION METHOD THEREOF**
FLAMMHEMMENDER TECHNISCHER KUNSTSTOFF UND HERSTELLUNGSVERFAHREN DAFÜR
MATIÈRES PLASTIQUES INDUSTRIELLES IGNIFUGES ET LEUR PROCÉDÉ DE PRÉPARATION

(30) Priority: 05.07.2016 CN 201610523503
(43) Date of publication of application: 10.01.2018
(73) Proprietor: Guangdong Guangshan New Materials Co., Ltd., Guangdong 523000 (CN)
(72) Inventor: PAN, Qingchong, Guangdong 523000 (CN)
(74) Representative: Brevalex

(56) References cited:
- CN-A- 105 384 781
- US-A- 4 727 175
- US-A1- 2004 249 027
- US-A1- 2007 254 986
- US-B1- 6 632 891
- DATABASE WPI Week 201311 Thomson Scientific, London, GB; AN 2012-K99473 XP002773532, & CN 102 532 858 A (UNIV BEIJING TECHNOLOGY & BUSINESS) 4 July 2012 (2012-07-04)
- DATABASE WPI Week 201567 Thomson Scientific, London, GB; AN 2015-57428W XP002773533, & CN 104 817 764 A (LIU Z) 5 August 2015 (2015-08-05)
- DATABASE WPI Week 201545 Thomson Scientific, London, GB; AN 2015-321707 XP002773534, & CN 104 479 324 A (SUZHOU NEW DISTRICT JIAHE PLASTIC CO LTD) 1 April 2015 (2015-04-01)

## Description

### Technical field

The present invention relates to the technical field of flame-retardant materials, in particular to a flame-retardant engineering plastic and a preparation method thereof.

### Background art

Engineering plastics refer to industrial plastics used for industrial parts or shell materials, and are plastics having excellent properties of strength, impact resistance, heat resistance, hardness and aging resistance. Engineering plastics are a kind of high-performance polymer materials which can be used as structural materials and withstand mechanical stress at temperatures in a wide range, and can be used in more demanding chemical or physical environment. Engineering plastics have good mechanical properties and dimensional stability, and can maintain its excellent performances even at high or low temperatures, and thus can be used as plastics for engineering structural parts. Examples of engineering plastics are ABS, nylon, polysulfone and the like. Compared with general plastics, engineering plastics can meet higher requirements on mechanical properties, durability, corrosion resistance, heat resistance and so on, can be processed more conveniently, and can replace metal materials. Engineering plastics are widely used in electronic and electrical, automobile, construction, office equipment, machinery, aerospace and other industries. It has become an international fashion trend to replace steel with plastics and replace wood with plastics. Engineering plastics have belonged to a field developing in a fastest rate in the plastics industry of the current world. The development of engineering plastics not only supports national pillar industries and modern high-tech industries, but also promotes the transformation of traditional industries and adjustment of product structure.

Polycarbonate (PC) has unique properties of excellent light transmission, high glass transition temperature and impact strength, electrical insulation and weather resistance and others, and thus has become one of the fastest growing engineering plastics, and is widely used in construction, transportation, electronic and electrical equipments and optical devices. Polycarbonate itself has a limiting oxygen index of 28 and a vertical flame test (UL94) of grade V-2. However, in some specific applications, the flame retardancy of polycarbonate is still insufficient, so it must be modified to improve its flame retardancy. Since the environmental issues of halogen-based flame retardants, the development of novel intumescent flame retardant which is halogen-free, low-smoke, low toxicity and environmental protective is a current hotspot of research.

In order to improve the flame retardancy or grade of PC engineering plastics, metal hydroxide flame retardants containing crystal water such as aluminum hydroxide hydrate, magnesium hydroxide hydrate and others, or ammonium polyphosphate (APP) flame retardants, phosphate flame retardants are usually added currently. Chinese patent CN 104497529A discloses a flame-retardant PC/ABS engineering plastic consisting of the following components in the following weight percents: 50-70% of aromatic polycarbonate; 15-40% of acrylonitrile-butadiene-styrene terpolymer; 3-6% of a flame retardant; 1-4% of a compatilizer; 1-4% of an anti-impact modifier; and 0-1% of a lubricating agent, wherein the flame retardant is nano-aluminum hydroxide, but its flame-retardant effect and mechanical properties are not ideal.

CN 104817764A and CN 104479324A also relate to flame retardant engineering plastics.

### Contents of the invention

In view of this, in one aspect, the present invention provides a flame-retardant engineering plastic which has excellent flame-retardant effect and good mechanical properties.

A flame-retardant engineering plastic is characterized in that the raw materials of the engineering plastic comprise the following components in parts by mass: 40-60 parts of PC, 20-40 parts of epoxy resin, 10-20 parts of ABS and 5-15 parts of a halogen-free flame retardant.

The halogen-free flame retardant is:
- a compound having the following structure: 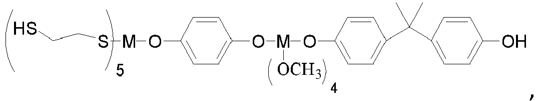 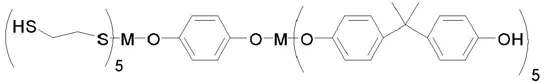 or 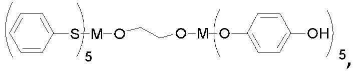 wherein M is a cyclotriphosphazene group, or
- a compound having a molecular structure as shown by Formula I:

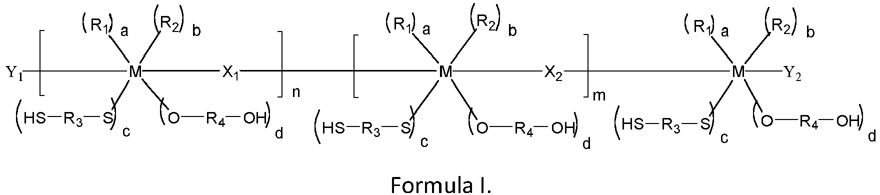

In Formula I, R₁ and R₂ are independently any inert nucleophilic group satisfying the chemical environment thereof; R₃ and R₄ are independently any organic group satisfying the chemical environment thereof; X₁ and X₂ are independently any one of -S-R₅-S-, -NH-R₆-NH-, -NH-R₇-O-, 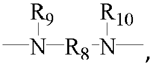 -S-R₁₁NH-, -O-R₁₂-COO- or -S-R₁₃-COO-; R₅, R₆, R₇, R₈, R₉, R₁₀, R₁₁, R₁₂ and R₁₃ are independently any organic group satisfying the chemical environment thereof; Y₁ and Y₂ are independently any nucleophilic group satisfying the chemical environment thereof; M is any one of cyclotriphosphazene groups M₁, a cyclic ring consisting of four or more phosphazene groups M₂, or non-cyclic polyphosphazene groups M₃, or a combination of at least two of them; each m and n is an integer greater than or equal to zero; each a, b, c and d is an integer greater than or equal to zero, and a+b+c+d+2 equals to two times of the number of phosphorus atoms in the M group.

In the present invention, said "satisfying the chemical environment thereof" means that the group can be connected to the adjacent atom(s) to obtain stable chemical bond(s). Preferably, R₁ and R₂ are independently any one of substituted or unsubstituted alkoxy, substituted or unsubstituted cycloalkoxy, substituted or unsubstituted aryloxy, substituted or unsubstituted arylalkoxy, substituted or unsubstituted heteroarylalkoxy, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group. These substituents of alkoxy, cycloalkoxy, aryloxy, arylalkoxy, heteroarylalkoxy, alkylthio group, arylthio group, carboxylate group, carbonate group, sulfonate group or phosphonate group are independently any one of straight-chain or branched alkyl, alkoxy, cycloalkoxy, aryl, aryloxy, arylalkoxy, heteroaryl, alkylthio group, arylthio group, carboxylate group, carbonate group, sulfonate group and phosphonate group, or a combination of at least two of them. Said substituents do not contain reactive capping groups. For example, said substituents do not contain reactive groups such as OH, -CN, -NH₂, -SH, -COOH, -CHO, -CONH₂ and others. As a specific example, when the substituent is a carboxylate group, it cannot be a formate group which still has a carboxyl group at one end.

Specifically, R₁ and R₂ are independently any one of CH₃O-, CH₃CH₂O-, CH₃S-, CH₃CH₂CH₂S-, CH₃COO- or PhO- (Ph represents a phenyl).

In the present invention, R₁ and R₂ may be the same group or different groups.

Preferably, R₃ and R₄ are independently any one of substituted or unsubstituted straight-chain or branched alkylene, substituted or unsubstituted cycloalkylene, substituted or unsubstituted arylene, substituted or unsubstituted heteroarylene, substituted or unsubstituted arylenealkylene, substituted or unsubstituted alkylenearylene, substituted or unsubstituted alkyleneheteroarylene, or substituted or unsubstituted heteroarylenealkylene.

Specifically, R₃ and R₄ can be independently any one of -CH₂-, -CH₂CH₂CH₂-,

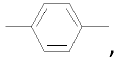

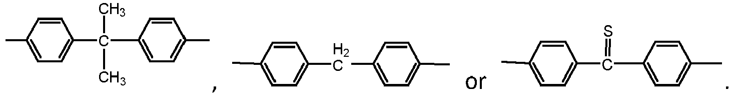

Preferably, R₅, R₆, R₇, R₈, R₁₁, R₁₂ and R₁₃ are independently any one of substituted or unsubstituted straight-chain or branched alkylene, substituted or unsubstituted cycloalkylene, substituted or unsubstituted arylene, substituted or unsubstituted heteroarylene, substituted or unsubstituted arylenealkylene, substituted or unsubstituted alkylenearylene, substituted or unsubstituted alkyleneheteroarylene, or substituted or unsubstituted heteroarylenealkylene.

Specifically, R₅, R₆, R₇, R₈, R₁₁, R₁₂ and R₁₃ can be independently any one of -CH₂-, -CH₂CH₂CH₂-, 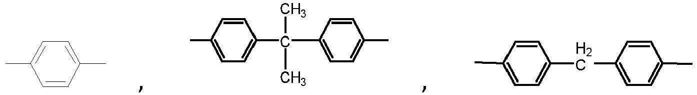 or

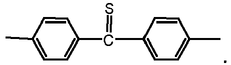

Preferably, R₉ and R₁₀ are independently any one of substituted or unsubstituted straight-chain or branched alkyl, substituted or unsubstituted cycloalkyl, substituted or unsubstituted alkoxy, substituted or unsubstituted cycloalkyloxy, substituted or unsubstituted aryl, substituted or unsubstituted heteroaryl, substituted or unsubstituted aryloxy, substituted or unsubstituted arylalkyloxy, substituted or unsubstituted alkylaryloxy, substituted or unsubstituted heteroaryalkoxy, substituted or unsubstituted alkoxyheteroaryl, substituted or unsubstituted heteroaryloxyalkyl, substituted or unsubstituted alkylheteroaryl, substituted or unsubstituted alkylaryl, substituted or unsubstituted arylalkyl, substituted or unsubstituted alkylheteroaryl, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group.

Specifically, R₉ and R₁₀ can be independently any one of -CH₃, -OCH₃, -CN, -COOH, -CHO, -CONH₂ or Ph-.

Preferably, Y₁ and Y₂ are independent any one of substituted or unsubstituted alkoxy, substituted or unsubstituted cycloalkyloxy, substituted or unsubstituted aryloxy, substituted or unsubstituted arylalkoxy, substituted or unsubstituted heteroarylalkoxy, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group

Specifically, Y₁ and Y₂ can be independently any one of -OCH₃, PhO-, CH₃S-, PhS- or CH₃COO-.

In the present invention, the substituted or unsubstituted straight-chain or branched alkyl is preferably substituted or unsubstituted C1-C12 (for example, C1, C2, C3, C4, C5, C6, C7, C8, C9, C10 or C11) straight-chain or branched alkyl, further preferably C1-C8 straight-chain or branched alkyl. When the number of carbon atom is 1, it is methyl; when the number of carbon atom is 2, it is ethyl.

The substituted or unsubstituted cycloalkyl is preferably substituted or unsubstituted C3-C12 (for example, C4, C5, C6, C7, C8, C9, C10 or C11) cycloalkyl.

The substituted or unsubstituted alkoxy is preferably substituted or unsubstituted C1-C12 (for example, C2, C3, C4, C5, C6, C7, C8, C9, C10 or C11) alkoxy.

The substituted or unsubstituted cycloalkoxy is preferably substituted or unsubstituted C3-C12 (for example, C4, C5, C6, C7, C8, C9, C10 or C11) cycloalkoxy.

The substituted or unsubstituted aryl is preferably phenyl, benzyl, naphthyl, 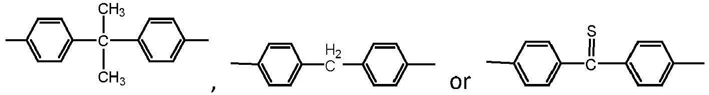 etc.

The substituted or unsubstituted heteroaryl is preferably five-membered or six-membered heteroaryl, further preferably is substituted or unsubstituted furyl or pyridyl.

The substituted or unsubstituted arylalkyl is preferably C7-C13 (for example, C8, C9, C10, C11 or C12) arylalkyl.

The substituted or unsubstituted alkylaryl is preferably C7-C13 (for example, C8, C9, C10, C11 or C12) alkylaryl.

The substituted or unsubstituted alkoxyaryl is preferably C7-C13 (for example, C8, C9, C10, C11 or C12) alkoxyaryl.

The substituted or unsubstituted heteroarylalkyl is preferably C7-C13 (for example, C8, C9, C10, C11 or C12) heteroarylalkyl.

The substituted or unsubstituted alkylheteroaryl is preferably C7-C13 (for example, C8, C9, C10, C11 or C12) alkylheteroaryl.

The substituted or unsubstituted straight-chain alkylene is preferably C1-C12 (for example, C2, C3, C4, C5, C6, C7, C8, C9, C10 or C11) straight-chain alkylene.

The substituted or unsubstituted branched alkylene is preferably C1-C12 (for example, C2, C3, C4, C5, C6, C7, C8, C9, C10 or C11) branched alkylene.

The substituted or unsubstituted arylene is preferably C6-C13 (for example, C7, C8, C9, C10, C11 or C12) arylene.

The substituted or unsubstituted heteroarylene is preferably C5-C13 (for example, C6, C7, C8, C9, C10, C11 or C12) heteroarylene.

The substituted or unsubstituted alkylenearylene is preferably C7-C13 (for example, C8, C9, C10, C11 or C12) alkylenearylene.

The substituted or unsubstituted arylenealkylene is preferably C7-C13 (for example, C8, C9, C10, C11 or C12) arylenealkylene.

The substituted or unsubstituted alkyleneheteroarylene is preferably C6-C13 (for example, C7, C8, C9, C10, C11 or C12) alkyleneheteroarylene.

The substituted or unsubstituted heteroarylenealkylene is preferably C6-C13 (for example, C7, C8, C9, C10, C11 or C12) heteroarylenealkylene.

The substituted or unsubstituted alkoxyheteroaryl is preferably C7-C13 (for example, C8, C9, C10, C11 or C12) alkoxyheteroaryl.

The substituted or unsubstituted heteroarylalkoxy is preferably C7-C13 (for example, C8, C9, C10, C11 or C12) heteroarylalkoxy.

The substituted or unsubstituted heteroaryloxyalkyl is preferably C7-C13 (for example, C8, C9, C10, C11 or C12) heteroaryloxyalkyl.

The substituted or unsubstituted arylalkoxy is preferably C7-C12 (for example, C8, C9, C10 or C11) arylalkoxy.

The substituted or unsubstituted alkylaryloxy is preferably C7-C12 (for example, C8, C9, C10 or C11) alkylaryloxy.

The substituted or unsubstituted alkylthio group is preferably C1-C8 (for example, C1, C2, C3, C4, C5, C6, C7 or C8) alkylthio group.

The substituted or unsubstituted arylthio group is preferably C7-C12 (for example, C8, C9, C10 or C11) arylthio group.

The term "substituted" used in the present invention means any one or more hydrogen atoms on a specified atom is/are substituted by a substituent selected from a specified group, with a condition that the specified atom does not exceed the normal valence thereof and the substituting result is forming a stable compound. When the substituent is an oxo group or a ketone group (i.e. =O), two hydrogen atoms on a specified atom are substituted. A ketone substituent does not exist on aromatic ring. "stable compound" means a compound which can be separated robustly enough to an effective purity from the reaction mixture and be prepared into an effective compound.

In the present application, M is one of cyclotriphosphazene groups M₁, a cyclic ring consisting of four or more phosphazene groups M₂, or non-cyclic polyphosphazene groups M₃, or a combination of at least two of them.

Preferably, M contains at least 50 wt% of M₁, at most 30 wt% of M₂, and at most 45 wt% of M₃.

In the present invention, the content of M₁ is at least 50 wt%, i.e. the content of M₁ can be 50-100 wt%. M₁ is a main component. When the content is 100 wt%, there is no M₂ and M₃. The typical but non-limiting content of M₁ in the present invention can be 50 wt%, 51 wt%, 55 wt%, 58 wt%, 60 wt%, 65 wt%, 70 wt%, 74 wt%, 75 wt%, 80 wt%, 85 wt%, 90 wt%, 92 wt%, 95 wt%, 98 wt% or 100 wt%.

In the present invention, the content of M₂ is at most 30 wt%, i.e., the content of M₂ can be 0-30 wt%. When the content of M₂ is 0 wt%, it means that there is no M₂. The typical but non-limiting content of M₂ in the present invention can be 0 wt%, 2 wt%, 5 wt%, 8 wt%, 11wt%, 14wt%, 16 wt%, 17 wt%, 19 wt%, 20 wt%, 22 wt%, 25 wt%, 27 wt%, 28 wt% or 29 wt%.

In the present invention, the content of M₃ is at most 45 wt%, i.e., the content of M₃ can be 0-45 wt%. When the content of M₃ is 0 wt%, it means that there is no M₃. The typical but non-limiting content of M₃ in the present invention can be 0 wt%, 2 wt%, 5 wt%, 8 wt%, 10 wt%, 12 wt%, 14 wt%, 16wt%, 18 wt%, 20 wt%, 23 wt%, 25 wt%, 27 wt%, 28 wt%, 30 wt%, 32 wt%, 35 wt%, 38 wt%, 40 wt%, 43 wt% or 45 wt%.

In the present invention, the sum of the mass percentages of M₁, M₂ and M₃ is 100%.

In the structural formula I of the present invention, m and n are integers greater than or equal to zero, and m and n may be or may not be zero at the same time. For example, m may be, but not limited to, 0, 1, 2, 3, 4, 5, 6, 7, 8, 9 or 10; and n may be, but not limited to 0, 1, 2, 3, 4, 5, 6, 7, 8, 9 or 10.

a, b, c and d are integers greater than or equal to zero, and c and d cannot be zero at the same time, i.e., ensuring that the groups carried by M contain at least one reactive group (e.g., -SH or -OH).

In the structural formula of the present invention, the groups connected to M are connected to the phosphorus atom in M. a + b + c + d + 2 in the formula I of the present invention is two times of the number of phosphorus atoms in the M group, i.e., ensuring that the phosphorus atom on M reaches a pentavalent saturated state.

Preferably, the structure of M₁ is: 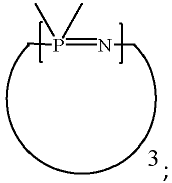 the structure of M₂ is: 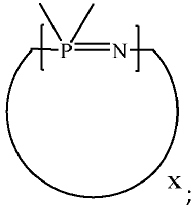 wherein, x is greater than or equal to 4;
the structure of M₃ is: 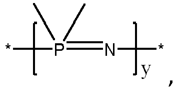 wherein, y is greater than or equal to 3.

It should be noted that, in the expression for structures of M₁ and M₂, the symbol of 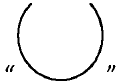 is merely a schematic illustration for cyclic structure.

The present invention provides a halogen-free flame retardant which does not contain halogens in all groups or substituents of groups in its chemical formula.

Preferably, the halogen-free flame retardant of the present invention is one of the compounds having the following structures, or a combination of at least two of them: 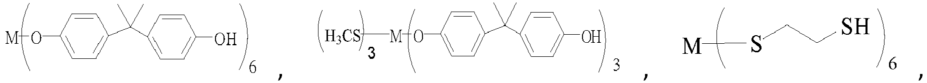 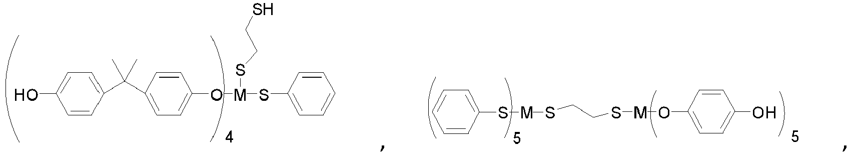 or 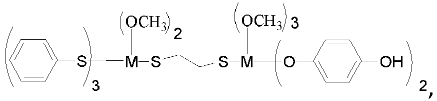 wherein M is a cyclotriphosphazene group.

In another aspect, the present invention provides a method for preparing the halogen-free flame retardant.

The halogen-free flame retardant of the formula I of the present invention is prepared by a nucleophilic substitution reaction of phosphonitrilic chloride with a nucleophile.

The phosphonitrilic chloride refers to M-Cl_{a+b+c+d+2}, and the nucleophile refers to the nucleophiles corresponding to R₁, R₂, -S-R₃-SH, -O-R₄-OH, X₁, X₂, Y₁ and Y₂. For example, when R₁ is methoxyl, the nucleophile which can carry out a nucleophilic substitution reaction with phosphonitrilic chloride to make the methoxyl connect to phosphorus atoms of M can be methanol or sodium methoxide; when R₂ is methylthio group (CH₃S-), the nucleophile which can carry out a nucleophilic substitution reaction with phosphonitrilic chloride to make the methylthio group connect to phosphorus atoms of M can be methyl mercaptan or sodium methanethiolate; when -S-R₃-SH is -S-CH₂CH₂-SH, the nucleophile which can carry out a nucleophilic substitution reaction with phosphonitrilic chloride to make -S-CH₂CH₂-SH connect to phosphorus atoms of M can be HS-CH₂CH₂-SH; when -O-R₄-OH is 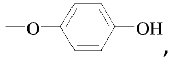 the nucleophile which can carry out a nucleophilic substitution reaction with phosphonitrilic chloride to make 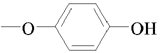 connect to phosphorus atoms of M can be 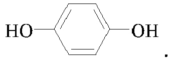 By using the same method, the connection of X₁, X₂, Y₁ and Y₂ can be achieved, wherein the nucleophiles corresponding to X₁ and X₂ are nucleophiles which contain at least two active reactive groups which can carry out a nucleophilic substitution reaction with M to make X₁ and X₂ connect to phosphorus atoms of M. The halogen-free flame retardant of formula I contains at least one reactive group -SH or -OH. When c or d is zero, it indicates that the reactants involved in nucleophilic reactions do not contain the reactants corresponding to c or d.

In the nucleophilic substitution reaction, chlorine atom in phosphonitrilic chloride is substituted. The nucleophilic substitution reaction can be carried out by methods well-known in the art. Specific examples of catalysts used in nucleophilic substitution reaction are metal chlorides such as zinc chloride, magnesium chloride, aluminum chloride etc., or boron trifluoride and complexes thereof, or Lewis bases such as sodium hydroxide etc. These catalysts may be used alone or in combination, which is not specially defined in the present invention. The "phosphonitrilic chloride" herein refers to a compound obtained by connecting the M group of formula I to Cl. The phosphonitrilic chloride can be prepared by using well-known solvents, catalysts according to a well-known reaction scheme, or by preparing directly a chlorinated phosphazene compound using phosphorus pentachloride and ammonium chloride according to a well-known method followed by treating and purifying through physical methods or without purifying, wherein, for the reaction of PCl₃+ NH₄Cl→1/n(NPCl₂)n+ 4HCl, the reaction products are mainly trimers (PNCl₂)₃ (namely hexachlorocyclotriphosphazene) and tetramers (PNCl₂)₄, and pure hexachlorocyclotriphosphazene can be obtained by slowly subliming the reaction products under vacuum at 60°C. Chlorinated phosphazene compounds with a structure of a cyclic ring consisting of four or more phosphazene groups and chlorinated non-cyclic polyphosphazene can also be prepared by known techniques.

In the above preparation method, the nucleophile necessarily contains a nucleophile containing at least two active reactive groups (i.e., -S-R₃-SH, -O-R₄-OH, nucleophiles corresponding to X₁ and X₂; R₃, R₄, X₁ and X₂ are the same as defined above) to obtain the connecting structure of the groups in the halogen-free flame-retardant compound as shown by the formula I and ensure that the structure of the formula I contains at least one reactive capping group. Examples of the nucleophile having at least two active reactive groups may include, but not limited to, hydroquinone, resorcinol, naphthalenediol, mixed dihydroxybenzene, 1,4-naphthol, bisphenol A, bisphenol S, bisphenol F, 1,4-phenyldithiol, 1,2-ethanedithiol, 1,3-propanedithiol, terephthalic acid and others.

In addition to the above nucleophiles containing at least two active reactive groups, other nucleophiles which contain one active reactive group can also be used, such as monohydric alcohols (e.g., methanol, ethanol) or sodium salts thereof, phenol, monocarboxylates (e.g., sodium acetate), monoamines (e.g., methylamine, ethylamine), monohydric mercaptans (e.g., methanethiol, ethanethiol) and so on.

In the reaction of nucleophile and phosphonitrilic chloride, a nucleophile having one active reactive group can be firstly used to react with phosphonitrilic chloride to partly substitute chlorine atom(s) in the phosphonitrilic chloride, and then, another nucleophile having at least two active reactive groups is used to react with the phosphonitrilic chloride to obtain the halogen-free flame retardant of formula I.

The raw materials of the engineering plastic of the present invention comprise the following components in parts by mass: 40-60 parts of PC, 20-40 parts of epoxy resin, 10-20 parts of ABS and 5-15 parts of the halogen-free flame retardant of the present invention.

PC is polycarbonate, and is not particularly defined in the present applicaiton. ABS is acrylonitrile-butadiene-styrene terpolymer.

Of course, the above three raw materials of polycarbonate, ABS, and epoxy resin can be purchased from the market according to actual demands of the product.

Typical but non-limiting amount of PC used in the engineering plastic of the present invention is 41 parts, 42 parts, 44 parts, 45 parts, 47 parts, 49 parts, 50 parts, 52 parts, 55 parts or 59 parts.

Typical but non-limiting amount of epoxy resin used in the engineering plastic of the present invention is 21 parts, 22 parts, 24 parts, 25 parts, 27 parts, 29 parts, 30 parts, 32 parts, 34 parts, 36 parts or 38 parts.

In the raw materials of the engineering plastic of the present invention, the epoxy resin is one of liquid bisphenol A type epoxy resin, liquid bisphenol F type epoxy resin, solid bisphenol A type epoxy resin, solid bisphenol F type epoxy resin, bisphenol S type epoxy resin, cyclopentadiene type epoxy resin, or biphenyl type epoxy resin, or a combination of at least two of them.

Typical and non-limiting amount of ABS used in the engineering plastic of the present invention is 11 parts, 12 parts, 13 parts, 14 parts, 15 parts, 16 parts, 17 parts, 18 parts or 19 parts.

Typical and non-limiting amount of the halogen-free flame retardant used in the engineering plastic of the present invention is 6 parts, 7 parts, 8 parts, 9 parts, 10 parts, 11 parts, 12 parts, 13 parts or 14 parts.

According to actual needs and on the basis of the above raw materials, the raw materials of the engineering plastic may further contain 0.5-3 parts (for example, 0.6 parts, 0.8 parts, 1 part, 1.5 parts, 1.8 parts, 2 parts, 2.5 parts or 2.8 parts) by mass of additive, 5-25 parts (for example, 6 parts, 8 parts, 10 parts, 12 parts, 14 parts, 16 parts, 18 parts, 20 parts, 22 parts or 24 parts) by mass of reinforcing filler.

The additive preferably comprises 0.5-1 parts (for example, 0.6, 0.7, 0.8 or 0.9 parts) by mass of lubricant, 0.2-0.8 parts (for example, 0.3, 0.4, 0.5, 0.6 or 0.7 parts) by mass of antioxidant, 0.3-0.7 parts (for example, 0.4, 0.5 or 0.6 parts) by mass of compatibilizer.

The antioxidant, also known as stabilizer, is preferably n-octadecyl-β-(4-hydroxy-3,5-di-tert-butyl-phenyl)-propionate and organic phosphite powder.

The compatibilizer enhances the compatibility of the above PC, ABS and epoxy resin, and is preferably polysiloxane-acrylate compatibilizer.

The reinforcing filler contributes to the mechanical properties of engineering plastics. The reinforcing filler is preferably one of glass fibers, carbon fibers, metal fibers, whiskers, glass sheets and mineral fillers, or a combination of at least two of them.

In another aspect, the present invention provides a method for preparing a flame-retardant engineering plastic. The engineering plastic prepared by this method has excellent mechanical properties and good flame-retardancy.

A method for preparing an engineering plastic as described above, comprising mixing raw materials of the engineering plastic of the present invention, and subjecting the mixed raw materials to extrusion granulation.

A screw extruder is used for extrusion granulation, and the temperature thereof is: 200 ± 0.5 °C in a first zone, 220 ± 0.5 °C in a second zone, 220 ± 0.5 °C in a third zone, 220 ± 0.5 °C in a fourth zone, 240 ± 0.5 °C in a fifth zone, 270 ± 0.5 °C in a sixth zone, 270 ± 0.5 °C in a seventh zone, 270 ± 0.5 °C in an eighth zone, 250 ± 0.5 °C in a ninth zone, 250 ± 0.5 °C in a tenth zone, 280 ± 0.5 °C in an eleventh zone, 280 ± 0.5 °C in a twelfth zone. It can be understood that the zones herein means that the screw of the screw extruder are divided into a plurality of sections depending on different shapes, and each section corresponds to one zone.

The above term "xxxyl or group" refers to the remaining parts of the molecular structure of corresponding compounds after one or more hydrogen atoms or other atoms or atomic groups are removed.

Compared with the prior art, the present invention has the following beneficial effects:
The flame-retardant engineering plastic of the present invention contains a halogen-free flame retardant represented by the formula I as a component of raw materials. The addition of the flame retardant gives good flame retardancy and excellent mechanical properties to the engineered plastic. The present invention provides an engineering plastic prepared by raw materials comprising the following components in parts by mass: 40-60 parts of PC, 20-40 parts of epoxy resin, 10-20 parts of ABS and 5-15 parts of the halogen-free flame retardant. The engineering plastic prepared by the present invention has a bending strength which can be up to 82.4-84 MPa, a tensile strength of up to 65.7-66.6 MPa, a notched impact strength of up to 26.3-27 J/m, a melt index of 12.6-15, an oxygen index of 26.2-27.5%, and thus has excellent mechanical properties and good flame retardancy.

### Embodiments

The technical solutions of the present invention are further explained by combining with the following examples.

In the following examples, the used raw material of phosphonitrilic chloride (for example hexachlorocyclotriphosphazene) can be obtained by the synthetic methods described in the present invention or known in the art. The other raw materials can be obtained through commercial purchase.

### Example 1

In this example, the halogen-free flame retardant has the following structure:

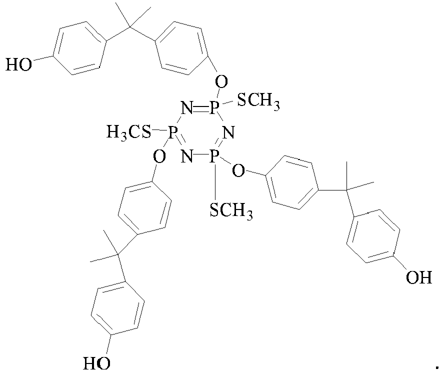

1 mol of hexachlorocyclotriphosphazene, 250 ml of acetone, 3 mol of bisphenol A and 3 mol of sodium methanethiolate were added to a 3-neck glass reactor having a volume of 2000 ml and having a stirring apparatus. While stirring, nitrogen was fed therein, and the reactor was heated to 60°C. 620 g of 20% sodium hydroxide solution was dripped into the reactor within 60 min, and then the mixture was held at 60°C, stirred and reacted for 15 hours. After reaction, the water in the system was removed by physical methods; the insoluble matters in the system were removed by filtration; and the solvent in the system was distilled off to obtain the above flame-retardant compound.

The obtained flame-retardant compound was characterized by nuclear magnetic resonance hydrogen spectrum, and the results are as follows:
¹H NMR (CDCl₃, 500 MHz): δ 6.6-7.0 (m, 24H, hydrogen on benzene ring), 5.0(s, 3H, hydrogen in phenolic hydroxyl), 2.0(m, 9H,SC*H*₃)1.6 (m, 18H, hydrogen in methyl on bisphenol A group).

Characteristic peak positions in infrared spectroscopy: characteristic absorption peak of P=N bond in the skeleton of phosphazene, 1217 cm⁻¹; P-N in the skeleton of phosphazene, 874 cm⁻¹; absorption peak of methyl ether, 2995 cm⁻¹; absorption peak of P-O-C bond, 1035cm⁻¹; skeleton vibration absorption peaks of benzene ring in bisphenol A group, 1611 cm⁻¹, 1509 cm⁻¹, 1446 cm⁻¹; absorption peaks of phenolic hydroxyl, 3610 cm⁻¹, 1260 cm⁻¹. 5 parts by mass of flame retardant, 40 parts by mass of PC, 40 parts by mass of epoxy resin, 20 parts by mass of ABS, 0.5 parts by mass of lubricant, 0.2 parts by mass of antioxidant, 0.3 parts by mass of compatibilizer and 5 parts by mass of glass fiber were mixed sufficiently in a mixing machine. Then, the mixture was extruded and granulated using a screw extruder to obtain a flame-retardant engineering plastic: 199.5°C in a first zone, 219.5°C in a second zone, 219.5°C in a third zone, 219.5°C in a fourth zone, 239.5°C in a fifth zone, 269.5°C in a sixth zone, 269.5°C in a seventh zone, 269.5°C in an eighth zone, 249.5°C in a ninth zone, 249.5°C in a tenth zone, 279.5°C in an eleventh zone, 279.5°C in a twelfth zone.

### Example 2

In this example, the halogen-free flame retardant has the following structure:

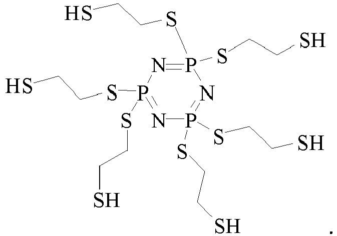

1 mol of hexachlorocyclotriphosphazene, 250 ml of acetone and 6 mol of ethanedithiol were added to a 3-neck glass reactor having a volume of 2000 ml and having a stirring apparatus. While stirring, nitrogen was fed therein, and the reactor was heated to 60°C. 620 g of 20% sodium hydroxide solution was dripped into the reactor within 60 min, and then the mixture was held at 60°C, stirred and reacted for 15 hours. After reaction, the water in the system was removed by physical methods; the insoluble matters in the system were removed by filtration; and the solvent in the system was distilled off to obtain the above flame-retardant compound.

The obtained flame-retardant compound was characterized by nuclear magnetic resonance hydrogen spectrum, and the results are as follows:
¹H NMR (CDCl₃, 500 MHz): δ 2.8 (m, 24H, HS-C*H*₂C*H*₂S-), 1.5 (s, 6H, *H*S-CH₂CH₂S-).

Characteristic peak positions in infrared spectroscopy: characteristic absorption peak of P=N bond in the skeleton of phosphazene, 1217 cm⁻¹; P-N in the skeleton of phosphazene, 874 cm⁻¹; absorption peak of methyl ether, 2995 cm⁻¹; absorption peak of P-O-C bond, 1035cm⁻¹; absorption peak of CH₂-S, 2980 cm⁻¹; absorption peak of -SH, 2560 cm⁻¹. 15 parts by mass of flame retardant, 60 parts by mass of PC, 20 parts by mass of epoxy resin, 20 parts by mass of ABS, 1 parts by mass of lubricant, 0.8 parts by mass of antioxidant, 0.7 parts by mass of compatibilizer and 25 parts by mass of glass fiber were mixed sufficiently in a mixing machine. Then, the mixture was extruded and granulated using a screw extruder to obtain a flame-retardant engineering plastic: 205.5°C in a first zone, 220.5°C in a second zone, 220.5°C in a third zone, 220.5°C in a fourth zone, 240.5°C in a fifth zone, 270.5°C in a sixth zone, 270.5°C in a seventh zone, 270.5°C in an eighth zone, 250.5°C in a ninth zone, 250.5°C in a tenth zone, 280.5°C in an eleventh zone, 280.5°C in a twelfth zone.

### Example 3

In this example, the halogen-free flame retardant has the following structure:

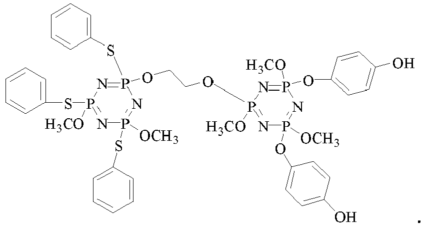

1 mol of hexachlorocyclotriphosphazene, 250 ml of acetone, 3 mol of thiophenol, 2 mol of sodium methoxide, and 1mol of ethylene glycol were added to a 3-neck glass reactor having a volume of 2000 ml and having a stirring apparatus. While stirring, nitrogen was fed therein, and the reactor was heated to 60°C. 620 g of 20% sodium hydroxide solution was dripped into the reactor within 60 min, and then the mixture was held at 60°C, stirred and reacted for 15 hours. Then, 1 mol of hexachlorocyclotriphosphazene was added, and the reaction was continued for 2 hours. Then, 2 mol of hydroquinone and 3 mol of sodium methoxide were added, and the reaction was continued for 6 hours. After reaction, the water in the system was removed by physical methods; the insoluble matters in the system were removed by filtration; and the solvent in the system was distilled off to obtain the above flame-retardant compound.

The obtained flame-retardant compound was characterized by nuclear magnetic resonance hydrogen spectrum, and the results are as follows:
¹H NMR (CDCl₃, 500 MHz): δ 7.0-7.2 (m, 15H, hydrogen on benzene ring in 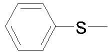 group), 6.6 (m, 8H, hydrogen on benzene ring in 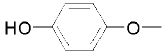 group), 5.0 (m, 2H, hydrogen on hydroxyl in 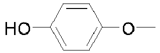 group), 3.7 (d, 4H, O-C*H*₂C*H*₂O-), 3.4(t, 15H, O-C*H*₃).

Characteristic peak positions in infrared spectroscopy: characteristic absorption peak of P=N bond in the skeleton of phosphazene, 1217 cm⁻¹; P-N in the skeleton of phosphazene, 874 cm⁻¹; absorption peak of methyl ether, 2995 cm⁻¹; absorption peak of P-O-C bond, 1035cm⁻¹; absorption peak of CH₂-O, 2983 cm⁻¹; absorption peaks of phenolic hydroxy, 3610cm⁻¹, 1260 cm⁻¹. 10 parts by mass of flame retardant, 50 parts by mass of PC, 30 parts by mass of epoxy resin, 15 parts by mass of ABS, 0.75 parts by mass of lubricant, 0.5 parts by mass of antioxidant, 0.5 parts by mass of compatibilizer and 15 parts by mass of glass fiber were mixed sufficiently in a mixing machine. Then, the mixture was extruded and granulated using a screw extruder to obtain a flame-retardant engineering plastic: 200°C in a first zone, 220.5°C in a second zone, 220°C in a third zone, 220°C in a fourth zone, 240°C in a fifth zone, 270°C in a sixth zone, 270°C in a seventh zone, 270°C in an eighth zone, 250°C in a ninth zone, 250°C in a tenth zone, 280°C in an eleventh zone, 280°C in a twelfth zone.

### Example 4

In this example, the halogen-free flame retardant has the following structure:

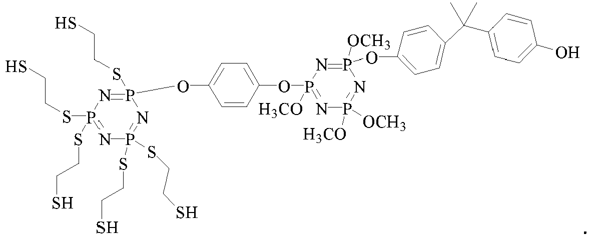

1 mol of hexachlorocyclotriphosphazene, 250 ml of acetone, 5 mol of ethanedithiol, and 1 mol of hydroquinone were added to a 3-neck glass reactor having a volume of 2000 ml and having a stirring apparatus. While stirring, nitrogen was fed therein, and the reactor was heated to 60°C. 620 g of 20% sodium hydroxide solution was dripped into the reactor within 60 min, and then the mixture was held at 60°C, stirred and reacted for 15 hours. Then, 1 mol of hexachlorocyclotriphosphazene was added, and the reaction was continued for 5 hours. Then, 1 mol of bisphenol A and 4 mol of sodium methoxide were added, and the reaction was continued for 10 hours. After reaction, the water in the system was removed by physical methods; the insoluble matters in the system were removed by filtration; and the solvent in the system was distilled off to obtain the above flame-retardant compound.

The obtained flame-retardant compound was characterized by nuclear magnetic resonance hydrogen spectrum, and the results are as follows:
¹H NMR (CDCl₃, 500 MHz): δ 6.5-7.0 (m, 44H, hydrogen on benzene ring), 5.0(s, 5H, hydrogen in phenolic hydroxyl), 2.8 (m, 20H, HS-C*H*₂C*H*₂S-), 1.7 (s, 30H, hydrogen in methyl), 1.5 (s, 5H, hydrogen in methyl).

Characteristic peak positions in infrared spectroscopy: characteristic absorption peak of P=N bond in the skeleton of phosphazene, 1217 cm⁻¹; P-N in the skeleton of phosphazene, 874 cm⁻¹; absorption peak of methyl ether, 2995 cm⁻¹; absorption peak of P-O-C bond, 1035cm⁻¹; absorption peak of CH₂-O, 2983 cm⁻¹; skeleton vibration absorption peaks of benzene ring in bisphenol A group, 1611 cm⁻¹, 1509 cm⁻¹, 1446 cm⁻¹; absorption peaks of phenolic hydroxyl, 3610 cm⁻¹, 1260 cm⁻¹.

8 parts by mass of flame retardant, 60 parts by mass of PC, 20 parts by mass of epoxy resin, 20 parts by mass of ABS, 0.7 parts by mass of lubricant, 0.5 parts by mass of antioxidant, 0.6 parts by mass of compatibilizer and 15 parts by mass of glass fiber were mixed sufficiently in a mixing machine. Then, the mixture was extruded and granulated using a screw extruder to obtain a flame-retardant engineering plastic: 199.5°C in a first zone, 219.5°C in a second zone, 220.5°C in a third zone, 220.5°C in a fourth zone, 239.5°C in a fifth zone, 270.5°C in a sixth zone, 270.5°C in a seventh zone, 270.5°C in an eighth zone, 250°C in a ninth zone, 250.5°C in a tenth zone, 280.5°C in an eleventh zone, 280.5°C in a twelfth zone.

### Comparative Example 1

In this comparative example, an engineering plastic was prepared using a commercially available hexaphenoxycyclotriphosphazene as a flame retardant and in the same manner as that in Example 1. That is, 5 parts by mass of flame retardant, 40 parts by mass of PC, 40 parts by mass of epoxy resin, 20 parts by mass of ABS, 0.5 parts by mass of lubricant, 0.2 parts by mass of antioxidant, 0.3 parts by mass of compatibilizer and 5 parts by mass of glass fiber were mixed sufficiently in a mixing machine. Then, the mixture was extruded and granulated using a screw extruder to obtain a flame-retardant engineering plastic: 199.5°C in a first zone, 219.5°C in a second zone, 219.5°C in a third zone, 219.5°C in a fourth zone, 239.5°C in a fifth zone, 269.5°C in a sixth zone, 269.5°C in a seventh zone, 269.5°C in an eighth zone, 249.5°C in a ninth zone, 249.5°C in a tenth zone, 279.5°C in an eleventh zone, 279.5°C in a twelfth zone.

### Comparative Example 2

In this comparative example, commercially available aluminum hydroxide is used as a flame retardant. 10 parts by mass of flame retardant, 50 parts by mass of PC, 30 parts by mass of epoxy resin, 15 parts by mass of ABS, 0.75 parts by mass of lubricant, 0.5 parts by mass of antioxidant, 0.5 parts by mass of compatibilizer and 15 parts by mass of glass fiber were mixed sufficiently in a mixing machine. Then, the mixture was extruded and granulated using a screw extruder to obtain a flame-retardant engineering plastic: 200°C in a first zone, 220.5°C in a second zone, 220°C in a third zone, 220°C in a fourth zone, 240°C in a fifth zone, 270°C in a sixth zone, 270°C in a seventh zone, 270°C in an eighth zone, 250°C in a ninth zone, 250°C in a tenth zone, 280°C in an eleventh zone, 280°C in a twelfth zone.

The cable products of all the above-mentioned examples and comparative examples were tested and the results are shown in Table-1 (the specific test methods are not described considering that they are well-known by those skilled in the art).

**Table-1**

| Test Items | Example 1 | Example 2 | Example 3 | Example 4 | Comparative Example 1 | Comparative Example 2 |
|---|---|---|---|---|---|---|
| Bending strength (MPa) | 82.6 | 82.4 | 84.0 | 83.6 | 81 | 80 |
| Tensile strength (MPa) | 65.9 | 65.7 | 66.2 | 65.9 | 62 | 63 |
| Notched impact strength (J/m) | 26.6 | 26.3 | 27 | 26.8 | 21.1 | 20.8 |
| Melt index (280°C, 2.16KG) | 13.2 | 12.6 | 15 | 14 | 15.7 | 15.6 |
| Oxygen index (%, GB/T 2406-2009) | 26.2 | 26.5 | 27.5 | 26.8 | 20 | 21 |

The test data in the above table show that the engineering plastics of the present invention have bending strength, tensile strength and notched impact strength better than those of the comparative examples, indicating that the addition of the flame retardant material of the present invention can improve mechanical properties. In particular, the flame retardancy of the products of these examples is more outstanding than those of the comparative examples, indicating that the engineering plastics of the present invention have good flame retardancy.

The applicant states that: the present invention illustrates the engineering plastics of the present invention and preparation methods thereof by the above examples, but the present invention is not limited to the above examples, that is to say, it does not mean that the present invention must be conducted relying on the above examples. Those skilled in the art should understand that any modification to the present invention, any equivalent replacement of each raw material of the products of the present invention and the addition of auxiliary ingredients, the selection of specific embodiment and the like all fall into the protection scope and the disclosure scope of the present invention.

## Claims

1. A flame-retardant engineering plastic, **characterized in that** the raw materials of the engineering plastic comprise the following components in parts by mass: 40-60 parts of PC, 20-40 parts of epoxy resin, 10-20 parts of ABS and 5-15 parts of a halogen-free flame retardant;
the halogen-free flame retardant is:
- a compound having the following structure: 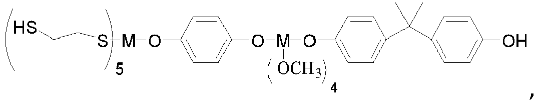 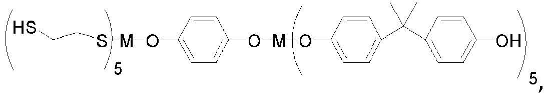 or 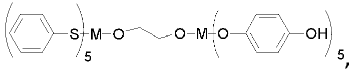 wherein M is a cyclotriphosphazene group, or
- a compound having a molecular structure as shown by Formula I: 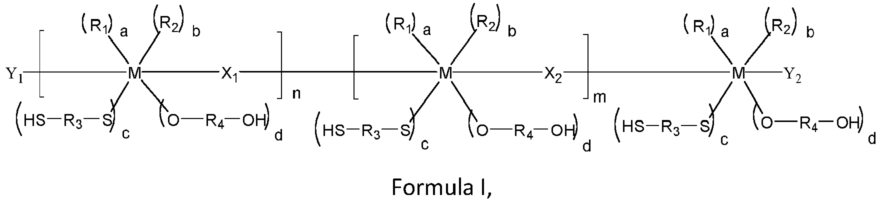 in Formula I, R₁ and R₂ are independently any inert nucleophilic group satisfying the chemical environment thereof; R₃ and R₄ are any organic group satisfying the chemical environment thereof; X₁ and X₂ are independently any one of -S-R₅-S-, -NH-R₆-NH-, -NH-R₇-O-, 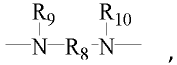 -S-R₁₁NH-, -O-R₁₂-COO- or -S-R₁₃-COO-; R₅, R₆, R₇, R₈, R₉, R₁₀, R₁₁, R₁₂ and R₁₃ are independently any organic group satisfying the chemical environment thereof; Y₁ and Y₂ are independently any nucleophilic group satisfying the chemical environment thereof; M is any one of cyclotriphosphazene groups M₁, a cyclic ring consisting of four or more phosphazene groups M₂, or non-cyclic polyphosphazene groups M₃, or a combination of at least two of them; each m and n is an integer greater than or equal to zero; each a, b, c and d is an integer greater than or equal to zero, and c and d are not zero simultaneously, and a+b+c+d+2 equals to two times of the number of phosphorus atoms in the M group.

2. The engineering plastic of claim 1, **characterized in that** R₁ and R₂ are independently any one of substituted or unsubstituted alkoxy, substituted or unsubstituted cycloalkoxy, substituted or unsubstituted aryloxy, substituted or unsubstituted arylalkoxy, substituted or unsubstituted heteroarylalkoxy, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group; the substituents of alkoxy, cycloalkoxy, aryloxy, arylalkoxy, heteroarylalkoxy, alkylthio group, arylthio group, carboxylate group, carbonate group, sulfonate group or phosphonate group are any one of straight-chain or branched alkyl, alkoxy, cycloalkoxy, aryl, aryloxy, arylalkoxy, heteroaryl, alkylthio group, arylthio group, carboxylate group, carbonate group, sulfonate group or phosphonate group, or a combination of at least two of them; the substituents do not contain reactive capping groups;
preferably, R₃ and R₄ are independently any one of substituted or unsubstituted straight-chain or branched alkylene, substituted or unsubstituted cycloalkylene, substituted or unsubstituted arylene, substituted or unsubstituted heteroarylene, substituted or unsubstituted arylenealkylene, substituted or unsubstituted alkylenearylene, substituted or unsubstituted alkyleneheteroarylene, or substituted or unsubstituted heteroarylenealkylene;
preferably, R₅, R₆, R₇, R₈, R₁₁, R₁₂ and R₁₃ are independently any one of substituted or unsubstituted straight-chain or branched alkylene, substituted or unsubstituted cycloalkylene, substituted or unsubstituted arylene, substituted or unsubstituted heteroarylene, substituted or unsubstituted arylenealkylene, substituted or unsubstituted alkylenearylene, substituted or unsubstituted alkyleneheteroarylene, or substituted or unsubstituted heteroarylenealkylene;
preferably, R₉ and R₁₀ are independently any one of substituted or unsubstituted straight-chain or branched alkyl, substituted or unsubstituted cycloalkyl, substituted or unsubstituted alkoxy, substituted or unsubstituted cycloalkyloxy, substituted or unsubstituted aryl, substituted or unsubstituted heteroaryl, substituted or unsubstituted aryloxy, substituted or unsubstituted arylalkyloxy, substituted or unsubstituted alkylaryloxy, substituted or unsubstituted heteroarylalkoxy, substituted or unsubstituted alkoxyheteroaryl, substituted or unsubstituted heteroaryloxyalkyl, substituted or unsubstituted alkylheteroaryl, substituted or unsubstituted alkylaryl, substituted or unsubstituted arylalkyl, substituted or unsubstituted alkylheteroaryl, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group;
preferably, Y₁ and Y₂ are independent any one of substituted or unsubstituted alkoxy, substituted or unsubstituted cycloalkyloxy, substituted or unsubstituted aryloxy, substituted or unsubstituted arylalkoxy, substituted or unsubstituted heteroarylalkoxy, substituted or unsubstituted alkylthio group, substituted or unsubstituted arylthio group, substituted or unsubstituted carboxylate group, substituted or unsubstituted carbonate group, substituted or unsubstituted sulfonate group, or substituted or unsubstituted phosphonate group;
preferably, the structure of M₁ is: 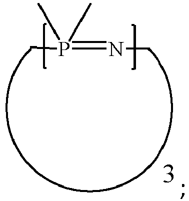 the structure of M₂ is: 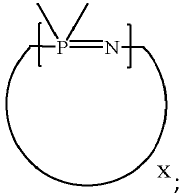 wherein, x is greater than or equal to 4; the structure of M₃ is: 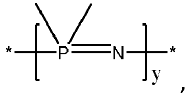 wherein, y is greater than or equal to 3;
preferably, M contains at least 50 wt% of M₁, at most 30 wt% of M₂, and at most 45 wt% of M₃.

3. The engineering plastic of claim 1 or 2, **characterized in that** the halogen-free flame retardant is one of the compounds having the following structures, or a combination of at least two of them: 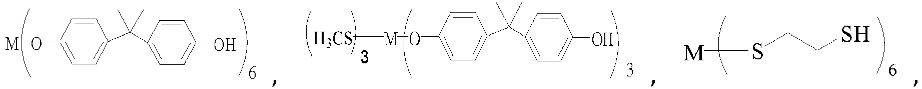 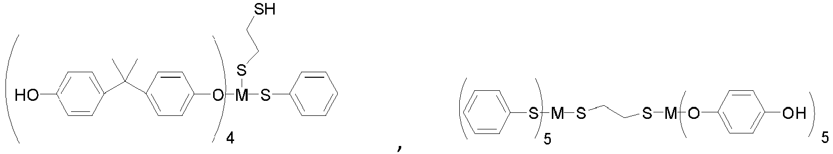 or 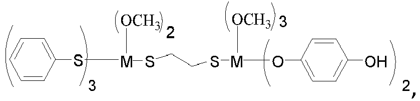 wherein M is a cyclotriphosphazene group.

4. The engineering plastic of any one of claims 1-3, **characterized in that** the epoxy resin is one of liquid bisphenol A type epoxy resin, liquid bisphenol F type epoxy resin, solid bisphenol A type epoxy resin, solid bisphenol F type epoxy resin, bisphenol S type epoxy resin, cyclopentadiene type epoxy resin, or biphenyl type epoxy resin, or a combination of at least two of them.

5. The engineering plastic of any one of claims 1-4, **characterized in that** the raw materials of the engineering plastic further contain 0.5-3 parts by mass of additive and 5-25 parts by mass of reinforcing filler;
preferably, the additive comprises 0.5-1 parts of lubricant, 0.2-0.8 parts of antioxidant, 0.3-0.7 parts of compatibilizer.

6. The engineering plastic of claim 5, **characterized in that** the antioxidant is n-octadecyl-β- (4-hydroxy-3,5-di-tert-butyl-phenyl)-propionate and organic phosphite powder;
preferably, the compatibilizer is polysiloxane-acrylate compatibilizer.

7. The engineering plastic of claim 5, **characterized in that** the reinforcing filler is one of glass fibers, carbon fibers, metal fibers, whiskers, glass sheets and mineral fillers, or a combination of at least two of them.

8. A method for preparing the engineering plastic of any one of claims 1-7, **characterized in that** it comprises mixing raw materials of the engineering plastic of any one of claims 1-3, and subjecting the mixed raw materials to extrusion granulation.

9. The method of claim 8, **characterized in that** the extrusion granulation is performed by a screw extruder having the following temperatures: 200 ± 0.5 °C in a first zone, 220 ± 0.5 °C in a second zone, 220 ± 0.5 °C in a third zone, 220 ± 0.5 °C in a fourth zone, 240 ± 0.5 °C in a fifth zone, 270 ± 0.5 °C in a sixth zone, 270 ± 0.5 °C in a seventh zone, 270 ± 0.5 °C in an eighth zone, 250 ± 0.5 °C in a ninth zone, 250 ± 0.5 °C in a tenth zone, 280 ± 0.5 °C in an eleventh zone, 280 ± 0.5 °C in a twelfth zone.

## Patentansprüche

1. Flammhemmender technischer Kunststoff, **dadurch gekennzeichnet, dass** die Ausgangsmaterialien des technischen Kunststoffs, in Masseteilen angegeben, die nachfolgenden Komponenten umfassen: 40-60 Teile an PC, 20-40 Teile an Epoxidharz, 10-20 Teile an ABS, und 5-15 Teile eines halogenfreien Flammschutzmittels;
das halogenfreie Flammschutzmittel wie folgt ist:
- eine Verbindung mit der nachfolgenden Struktur: 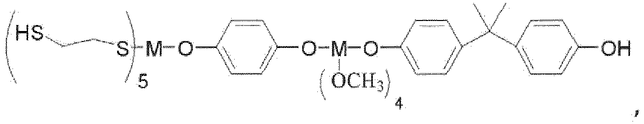 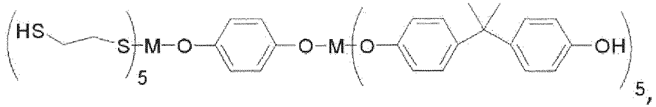 oder 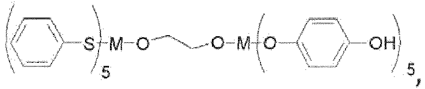 wobei M für eine Cyclotriphosphazengruppe steht, oder
- eine Verbindung mit einer in Formel I dargestellten Molekülstruktur: 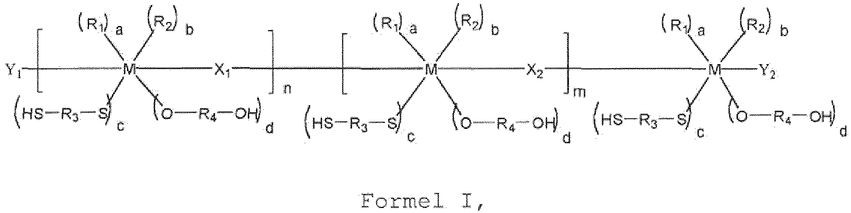 wobei in Formel I R₁ und R₂ unabhängig voneinander für eine beliebige inerte, nukleophile Gruppe stehen, welche ihrer chemischen Umgebung gerecht wird; R₃ und R₄ für eine beliebige organische Gruppe stehen, welche ihrer chemischen Umgebung gerecht wird; X₁ und X₂ unabhängig voneinander für eine beliebige Gruppe ausgewählt aus -S-R₅-S-, -NH-R₆-NH-, -NH-R₇-O-, 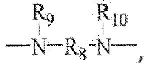 -S-R₁₁NH-, -O-R₁₂-COO- und -S-R₁₃-COO- stehen; P₅, R₆, R₇, R₈, R_{9,} R₁₀, R₁₁, R₁₂ und R₁₃ unabhängig voneinander für eine beliebige organische Gruppe stehen, welche ihrer chemischen Umgebung gerecht wird; Y₁ und Y₂ unabhängig voneinander für eine beliebige nukleophile Gruppe stehen, welche ihrer chemischen Umgebung gerecht wird; M für eine beliebige Gruppe ausgewählt aus Cyclotriphosphazengruppen M₁, einem cyclischen Ring bestehend aus vier oder mehr Phosphazengruppen M₂ und nichtcyclischen Polyphosphazengruppen M₃, oder für eine Kombination von zumindest zwei hiervon steht; jedes von m und n für eine ganze Zahl von größer oder gleich Null steht; und jedes von a, b, c und d für eine ganze Zahl größer oder gleich Null steht, wobei c und d nicht gleichzeitig Null sind und a+b+c+d+2 dem Doppelten der Anzahl an Phosphoratomen in der M-Gruppe entspricht.

2. Technischer Kunststoff gemäß Anspruch 1, **dadurch gekennzeichnet, dass** R₁ und R₂ unabhängig voneinander für eine beliebige Gruppe ausgewählt aus einer substituierten oder unsubstituierten Alkoxygruppe, einer substituierten oder unsubstituierten Cycloalkoxygruppe, einer substituierten oder unsubstituierten Aryloxygruppe, einer substituierten oder unsubstituierten Arylalkoxygruppe, einer substituierten oder unsubstituierten Heteroarylalkoxygruppe, einer substituierten oder unsubstituierten Alkylthiogruppe, einer substituierten oder unsubstituierten Arylthiogruppe, einer substituierten oder unsubstituierten Carboxylatgruppe, einer substituierten oder unsubstituierten Carbonatgruppe, einer substituierten oder unsubstituierten Sulfonatgruppe und einer substituierten oder unsubstituierten Phosphonatgruppe stehen; es sich bei den Substituenten der Alkoxygruppe, Cycloalkoxygruppe, Aryloxygruppe, Arylalkoxygruppe, Heteroarylalkoxygruppe, Alkylthiogruppe, Arylthiogruppe, Carboxylatgruppe, Carbonatgruppe, Sulfonatgruppe oder Phosphonatgruppe um eine beliebige Gruppe ausgewählt aus einer geradkettigen oder verzweigten Alkylgruppe, Alkoxygruppe, Cycloalkoxygruppe, Arylgruppe, Aryloxygruppe, Arylalkoxygruppe, Heteroarylgruppe, Alkylthiogruppe, Arylthiogruppe, Carboxylatgruppe, Carbonatgruppe, Sulfonatgruppe und Phosphonatgruppe, oder um eine Kombination von zumindest zwei hiervon handelt; und die Substituenten keine reaktiven Verkappungsgruppen enthalten;
R₃ und R₄ vorzugsweise unabhängig voneinander für eine beliebige Gruppe ausgewählt aus einer substituierten oder unsubstituierten, geradkettigen oder verzweigten Alkylengruppe, einer substituierten oder unsubstituierten Cycloalkylengruppe, einer substituierten oder unsubstituierten Arylengruppe, einer substituierten oder unsubstituierten Heteroarylengruppe, einer substituierten oder unsubstituierten Arylenalkylengruppe, einer substituierten oder unsubstituierten Alkylenarylengruppe, einer substituierten oder unsubstituierten Alkylenheteroarylengruppe und einer substituierten oder unsubstituierten Heteroarylenalkylengruppe stehen;
R₅, R₆, R₇, R₈, R₁₁, R₁₂ und R₁₃ vorzugsweise unabhängig voneinander für eine beliebige Gruppe ausgewählt aus einer substituierten oder unsubstituierten, geradkettigen oder verzweigten Alkylengruppe, einer substituierten oder unsubstituierten Cycloalkylengruppe, einer substituierten oder unsubstituierten Arylengruppe, einer substituierten oder unsubstituierten Heteroarylengruppe, einer substituierten oder unsubstituierten Arylenalkylengruppe, einer substituierten oder unsubstituierten Alkylenarylengruppe, einer substituierten oder unsubstituierten Alkylenheteroarylengruppe und einer substituiertem oder unsubstituiertem Heteroarylenalkylengruppe stehen;
R₉ und R₁₀ vorzugsweise unabhängig voneinander für eine beliebige Gruppe ausgewählt aus einer substituierten oder unsubstituierten, geradkettigen oder verzweigten Alkylgruppe, einer substituierten oder unsubstituierten Cycloalkylgruppe, einer substituierten oder unsubstituierten Alkoxygruppe, einer substituierten oder unsubstituierten Cycloalkyloxygruppe, einer substituierten oder unsubstituierten Arylgruppe, einer substituierten oder unsubstituierten Heteroarylgruppe, einer substituierten oder unsubstituierten Aryloxygruppe, einer substituierten oder unsubstituierten Arylalkyloxygruppe, einer substituierten oder unsubstituierten Alkylaryloxygruppe, einer substituierten oder unsubstituierten Heteroarylalkoxygruppe, einer substituierten oder unsubstituierten Alkoxyheteroarylgruppe, einer substituierten oder unsubstituierten Heteroaryloxyalkylgruppe, einer substituierten oder unsubstituierten Alkylheteroarylgruppe, einer substituierten oder unsubstituierten Alkylarylgruppe, einer substituierten oder unsubstituierten Arylalkylgruppe, einer substituierten oder unsubstituierten Alkylheteroarylgruppe, einer substituierten oder unsubstituierten Alkylthiogruppe, einer substituierten oder unsubstituierten Arylthiogruppe, einer substituierten oder unsubstituierten Carboxylatgruppe, einer substituierten oder unsubstituierten Carbonatgruppe, einer substituierten oder unsubstituierten Sulfonatgruppe und einer substituierten oder unsubstituierten Phosphonatgruppe stehen;
Y₁ und Y₂ vorzugsweise unabhängig voneinander für eine beliebige Gruppe ausgewählt aus einer substituierten oder unsubstituierten Alkoxygruppe, einer substituierten oder unsubstituierten Cycloalkyloxygruppe, einer substituierten oder unsubstituierten Aryloxygruppe, einer substituierten oder unsubstituierten Arylalkoxygruppe, einer substituierten oder unsubstituierten Heteroarylalkoxygruppe, einer substituierten oder unsubstituierten Alkylthiogruppe, einer substituierten oder unsubstituierten Arylthiogruppe, einer substituierten oder unsubstituierten Carboxylatgruppe, einer substituierten oder unsubstituierten Carbonatgruppe, einer substituierten oder unsubstituierten Sulfonatgruppe und einer substituierten oder unsubstituierten Phosphonatgruppe stehen;
die Struktur von M₁ vorzugsweise wie folgt ist: 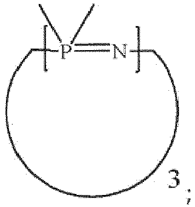 die Struktur von M₂ wie folgt ist: 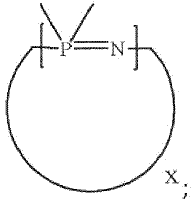 wobei x größer oder gleich 4 ist;
die Struktur von M₃ wie folgt ist: 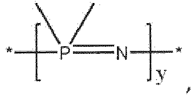 wobei y größer oder gleich 3 ist;
und wobei M vorzugsweise zumindest 50 Gew.-% an M₁, höchstens 30 Gew.-% an M₂ und höchstens 45 Gew.-% an M₃ enthält.

3. Technischer Kunststoff gemäß Anspruch 1 oder 2, **dadurch gekennzeichnet, dass** es sich bei dem halogenfreien Flammschutzmittel um eine der durch die nachfolgenden Strukturen dargestellten Verbindungen oder um eine Kombination von zumindest zwei hiervon handelt: 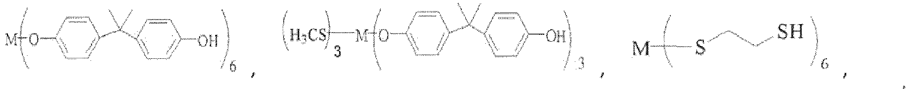 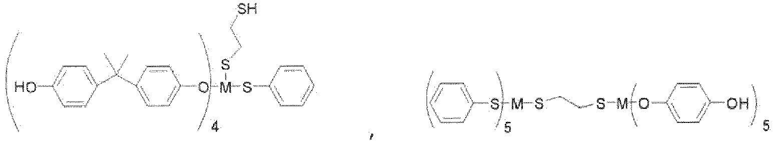 oder 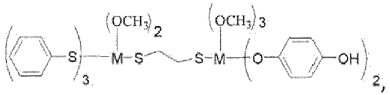 wobei M für eine Cyclotriphosphazengruppe steht.

4. Technischer Kunststoff gemäß einem der Ansprüche 1-3, **dadurch gekennzeichnet, dass** es sich bei dem Epoxidharz um ein Material ausgewählt aus flüssigem Epoxidharz vom Bisphenol A-Typ, flüssigem Epoxidharz vom Bisphenol F-Typ, festem Epoxidharz vom Bisphenol A-Typ, festem Epoxidharz vom Bisphenol F-Typ, Epoxidharz vom Bisphenol S-Typ, Epoxidharz vom Cyclopentadien-Typ und Epoxidharz vom Biphenyl-Typ, oder um eine Kombination von zumindest zwei hiervon handelt.

5. Technischer Kunststoff gemäß einem der Ansprüche 1-4, **dadurch gekennzeichnet, dass** die Ausgangsmaterialien des technischen Kunststoffs weiterhin 0.5-3 Masseteile an Additiv und 5-25 Masseteile an Verstärkerfüllstoff enthalten;
und wobei das Additiv vorzugsweise 0.5-1 Teile an Gleitmittel, 0.2-0.8 Teile an Antioxidationsmittel und 0.3-0.7 Teile an Kompatibilisierungsmittel umfasst.

6. Technischer Kunststoff gemäß Anspruch 5, **dadurch gekennzeichnet, dass** es sich bei dem Antioxidationsmittel um n-Octadecyl-β-(4-hydroxy-3,5-di-tert-butyl-phenyl)propionat und organisches Phosphitpulver handelt;
und wobei das Kompatibilisierungsmittel vorzugsweise ein Polysiloxan-Acrylat-Kompatibilisierungsmittel ist.

7. Technischer Kunststoff gemäß Anspruch 5, **dadurch gekennzeichnet, dass** es sich bei dem Verstärkerfüllstoff um ein Material ausgewählt aus Glasfasern, Kohlenstofffasern, Metallfasern, Haarkristallen, Glasbändern und mineralischen Füllstoffen, oder um eine Kombination von zumindest zwei hiervon handelt.

8. Verfahren zur Herstellung des technischen Kunststoffs gemäß einem der Ansprüche 1-7, **dadurch gekennzeichnet, dass** es das Mischen von Ausgangsmaterialien des technischen Kunststoffs gemäß einem der Ansprüche 1-3 sowie das Extrusionsgranulieren der miteinander vermischten Ausgangsmaterialien umfasst.

9. Verfahren gemäß Anspruch 8, **dadurch gekennzeichnet, dass** die Extrusionsgranulierung unter Verwendung eines die nachfolgenden Temperaturen aufweisenden Schneckenextruders erfolgt: 200 ± 0.5°C in einer ersten Zone, 220 ± 0.5°C in einer zweiten Zone, 220 ± 0.5°C in einer dritten Zone, 220 ± 0.5°C in einer vierten Zone, 240 ± 0.5°C in einer fünften Zone, 270 ± 0.5°C in einer sechsten Zone, 270 ± 0.5°C in einer siebten Zone, 270 ± 0.5°C in einer achten Zone, 250 ± 0.5°C in einer neunten Zone, 250 ± 0.5°C in einer zehnten Zone, 280 ± 0.5°C in einer elften Zone, 280 ± 0.5°C in einer zwölften Zone.

## Revendications

1. Matière plastique industrielle ignifuge, **caractérisée en ce que** les matières premières de la matière plastique industrielle comprennent les composants suivants en parties en masse : de 40 à 60 parties de PC, de 20 à 40 parties d'une résine époxy, de 10 à 20 parties d'ABS et de 5 à 15 parties d'un ignifugeant sans halogène ;
l'ignifugeant sans halogène est :
- un composé ayant la structure suivante : 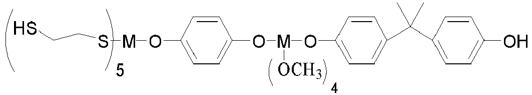 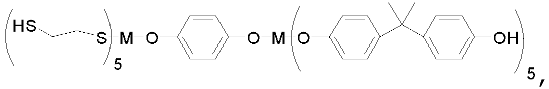 ou 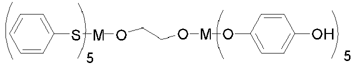 dans laquelle M est un groupe cyclotriphosphazène, ou
- un composé ayant une structure moléculaire telle que représentée par la formule I : 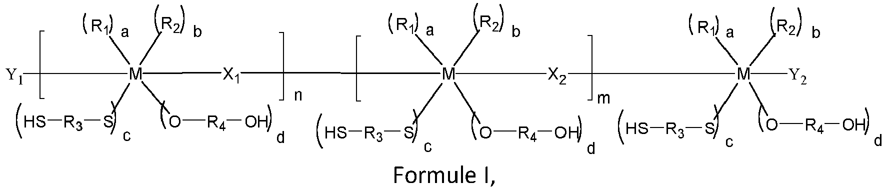 dans la formule I, R₁ et R₂ sont indépendamment n'importe quel groupe nucléophile inerte satisfaisant l'environnement chimique de celui-ci ; R₃ et R₄ sont n'importe quel groupe organique satisfaisant l'environnement chimique de celui-ci ; X₁ et X₂ sont indépendamment l'un quelconque parmi -S-R₅-S-, -NH-R₆-NH-, -NH-R₇-O-, 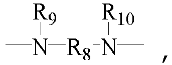 -S-R₁₁-NH-, -O-R₁₂-COO- or -S-R₁₃-COO-; R₃, R₆, R₇, R₈, R₉, R₁₀, R₁₁, R₁₂ et R₁₃ sont indépendamment n'importe quel groupe organique satisfaisant l'environnement chimique de celui-ci ; Y₁ et Y₂ sont indépendamment n'importe quel groupe nucléophile satisfaisant l'environnement chimique de celui-ci ; M est l'un quelconque parmi des groupes cyclotriphosphazène M₁, un cycle constitué de quatre groupes phosphazène M₂ ou plus, ou des groupes polyphosphazène non cycliques M₃, ou une combinaison d'au moins deux de ceux-ci ; chaque m et n est un nombre entier supérieur ou égal à zéro ; chaque a, b, c et d est un nombre entier supérieur ou égal à zéro, et c et d ne sont pas simultanément zéro, et a + b + c + d + 2 est égal à deux fois le nombre d'atomes de phosphore dans le groupe M.

2. Matière plastique industrielle selon la revendication 1, **caractérisée en ce que** R₁ et R₂ sont indépendamment l'un quelconque parmi un alcoxy substitué ou non substitué, un cycloalcoxy substitué ou non substitué, un aryloxy substitué ou non substitué, un arylalcoxy substitué ou non substitué, un hétéroarylalcoxy substitué ou non substitué, un groupe alkylthio substitué ou non substitué, un groupe arylthio substitué ou non substitué, un groupe carboxylate substitué ou non substitué, un groupe carbonate substitué ou non substitué, un groupe sulfonate substitué ou non substitué, ou un groupe phosphonate substitué ou non substitué ; les substituants de l'alcoxy, du cycloalcoxy, de l'aryloxy, de l'arylalcoxy, de l'hétéroarylalcoxy, du groupe alkylthio, du groupe arylthio, du groupe carboxylate, du groupe carbonate, du groupe sulfonate ou du groupe phosphonate sont l'un quelconque parmi un alkyle à chaîne linéaire ou ramifiée, un alcoxy, un cycloalcoxy, un aryle, un aryloxy, un arylalcoxy, un hétéroaryle, un groupe alkylthio, un groupe arylthio, un groupe carboxylate, un groupe carbonate, un groupe sulfonate ou un groupe phosphonate, ou une combinaison d'au moins deux de ceux-ci ; les substituants ne contiennent pas de groupes coiffants réactifs ;
de préférence, R₃ et R₄ sont indépendamment l'un quelconque parmi un alkylène à chaîne linéaire ou ramifiée substitué ou non substitué, un cycloalkylène substitué ou non substitué, un arylène substitué ou non substitué, un hétéroarylène substitué ou non substitué, un arylènealkylène substitué ou non substitué, un alkylènearylène substitué ou non substitué, un alkylènehétéro-arylène substitué ou non substitué, ou un hétéroarylènealkylène substitué ou non substitué ;
de préférence, Rs, R₆, R₇, R₈, R₁₁, R₁₂ et R₁₃ sont indépendamment l'un quelconque parmi un alkylène à chaîne linéaire ou ramifiée substitué ou non substitué, un cycloalkylène substitué ou non substitué, un arylène substitué ou non substitué, un hétéroarylène substitué ou non substitué, un arylènealkylène substitué ou non substitué, un alkylènearylène substitué ou non substitué, un alkylènehétéroarylène substitué ou non substitué, ou un hétéroarylènealkylène substitué ou non substitué ;
de préférence, R₉ et R₁₀ sont indépendamment l'un quelconque parmi un alkyle à chaîne linéaire ou ramifiée substitué ou non substitué, un cycloalkyle substitué ou non substitué, un alcoxy substitué ou non substitué, un cycloalkyloxy substitué ou non substitué, un aryle substitué ou non substitué, un hétéroaryle substitué ou non substitué, un aryloxy substitué ou non substitué, un arylalkyloxy substitué ou non substitué, un alkylaryloxy substitué ou non substitué, un hétéroarylalcoxy substitué ou non substitué, un alcoxyhétéroaryle substitué ou non substitué, un hétéroaryloxyalkyle substitué ou non substitué, un alkylhétéroaryle substitué ou non substitué, un alkylaryle substitué ou non substitué, un arylalkyle substitué ou non substitué, un alkylhétéroaryle substitué ou non substitué, un groupe alkylthio substitué ou non substitué, un groupe arylthio substitué ou non substitué, un groupe carboxylate substitué ou non substitué, un groupe carbonate substitué ou non substitué, un groupe sulfonate substitué ou non substitué, ou un groupe phosphonate substitué ou non substitué ;
de préférence, Y₁ et Y₂ sont indépendants de l'un quelconque parmi un alcoxy substitué ou non substitué, un cycloalkyloxy substitué ou non substitué, un aryloxy substitué ou non substitué, un arylalcoxy substitué ou non substitué, un hétéroarylalcoxy substitué ou non substitué, un groupe alkylthio substitué ou non substitué, un groupe arylthio substitué ou non substitué, un groupe carboxylate substitué ou non substitué, un groupe carbonate substitué ou non substitué, un groupe sulfonate substitué ou non substitué, ou un groupe phosphonate substitué ou non substitué ;
de préférence, la structure de M₁ est : 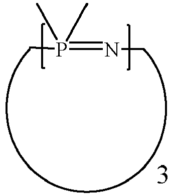 la structure de M₂ est : 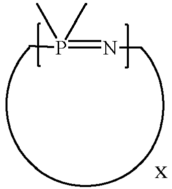 dans laquelle, x est supérieur ou égal à 4 ;
la structure de M₃ est : 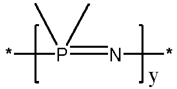 dans laquelle, y est supérieur ou égal à 3 ;
de préférence, M contient au moins 50 % en poids de M₁, au plus 30 % en poids de M₂, et au plus 45 % en poids de M₃.

3. Matière plastique industrielle selon la revendication 1 ou 2, **caractérisée en ce que** l'ignifugeant sans halogène est l'un des composés ayant les structures suivantes, ou une combinaison d'au moins deux de ceux-ci : 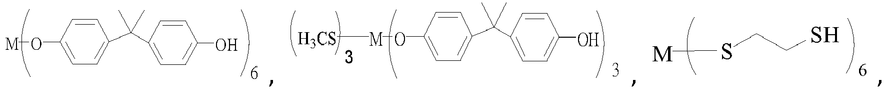 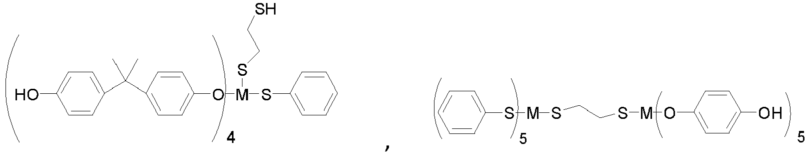 ou 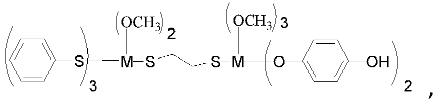 dans laquelle M est un groupe cyclotriphosphazène.

4. Matière plastique industrielle selon l'une quelconque des revendications 1 à 3, **caractérisée en ce que** la résine époxy est l'une parmi une résine époxy liquide de type bisphénol A, une résine époxy liquide de type bisphénol F, une résine époxy solide de type bisphénol A, une résine époxy solide de type bisphénol F, une résine époxy de type bisphénol S, une résine époxy de type cyclopentadiène, ou une résine époxy de type biphényle, ou une combinaison d'au moins deux de celles-ci.

5. Matière plastique industrielle selon l'une quelconque des revendications 1 à 4, **caractérisée en ce que** les matières premières de la matière plastique industrielle contiennent en outre de 0,5 à 3 parties en masse d'un additif et de 5 à 25 parties en masse d'une charge de renforcement ;
de préférence, l'additif comprend de 0,5 à 1 partie d'un lubrifiant, de 0,2 à 0,8 partie d'un antioxydant, de 0,3 à 0,7 partie d'un compatibilisant.

6. Matière plastique industrielle selon la revendication 5, **caractérisée en ce que** l'antioxydant est le β-(4-hydroxy-3,5-di-tert-butylphényl)propionate de n-octadécyle et une poudre de phosphite organique ;
de préférence, le compatibilisant est un compatibilisant polysiloxane-acrylate.

7. Matière plastique industrielle selon la revendication 5, **caractérisée en ce que** la charge de renforcement est l'une parmi les fibres de verre, les fibres de carbone, les fibres métalliques, les trichites, les feuilles de verre et les charges minérales, ou une combinaison d'au moins deux de celles-ci.

8. Procédé de préparation de la matière plastique industrielle selon l'une quelconque des revendications 1 à 7, **caractérisé en ce qu'**il comprend le mélange des matières premières de la matière plastique industrielle selon l'une quelconque des revendications 1 à 3, et la soumission des matières premières mélangées à une granulation par extrusion.

9. Procédé selon la revendication 8, **caractérisé en ce que** la granulation par extrusion est réalisée au moyen d'une extrudeuse à vis ayant les températures suivantes: 200±0,5°C dans une première zone, 220±0,5°C dans une deuxième zone, 220±0,5°C dans une troisième zone, 220±0,5°C dans une quatrième zone, 240±0,5°C dans une cinquième zone, 270±0,5°C dans une sixième zone, 270±0,5°C dans une septième zone, 270±0,5°C dans une huitième zone, 250±0,5°C dans une neuvième zone, 250±0,5°C dans une dixième zone, 280 ± 0,5 °C dans une onzième zone, 280 ± 0,5 °C dans une douzième zone.
